**Europäisches Patentamt**

(19) **European Patent Office**

**Office européen des brevets**

(11) **EP 0 725 921 B1**

(12) **EUROPÄISCHE PATENTSCHRIFT**

(45) Veröffentlichungstag und Bekanntmachung des Hinweises auf die Patenterteilung:
**24.10.2001 Patentblatt 2001/43**

(51) Int Cl.7: **G01B 11/24**

(21) Anmeldenummer: **94922835.7**

(22) Anmeldetag: **29.07.1994**

(86) Internationale Anmeldenummer:
**PCT/DE94/00898**

(87) Internationale Veröffentlichungsnummer:
**WO 95/04254 (09.02.1995 Gazette 1995/07)**

(54) **ANORDNUNG ZUR DREIDIMENSIONALEN VERMESSUNG UNZUGÄNGLICHER HOHLRÄUME**

THREE-DIMENSIONAL MEASUREMENT ARRANGEMENT FOR INACCESSIBLE CAVITIES

DISPOSITIF DE MESURE TRIDIMENSIONNELLE POUR CAVITES INACCESSIBLES

(84) Benannte Vertragsstaaten:
**CH DE FR GB IT LI**

(30) Priorität: **29.07.1993 DE 4325542**
**22.03.1994 DE 4409854**

(43) Veröffentlichungstag der Anmeldung:
**14.08.1996 Patentblatt 1996/33**

(73) Patentinhaber: **Fraunhofer-Gesellschaft zur Förderung der angewandten Forschung e.V. 80636 München (DE)**

(72) Erfinder:
• **HARTRUMPF, Matthias**
**D-76135 Karlsruhe (DE)**

• **MUNSER, Roland**
**D-76199 Karlsruhe (DE)**

(74) Vertreter: **Rösler, Uwe, Dipl.-Phys.**
**Rösler Patentanwaltskanzlei**
**Landsberger Strasse 480a**
**81241 München (DE)**

(56) Entgegenhaltungen:
**EP-A- 0 278 882        DE-A- 4 136 002**
**FR-A- 2 195 337**

• **PATENT ABSTRACTS OF JAPAN vol. 9, no. 257 (P-396) (1980) 15. Oktober 1985 & JP,A,60 107 506 (HITACHI SEISAKUSHO K.K.) 13. Juni 1985**

## Beschreibung

Die Erfindung betrifft eine Anordnung zur dreidimensionalen Vermessung unzugänglicher Hohlräume gemäß den Patentansprüchen 1 und 2.

## Stand der Technik

Zur Inspektion unzugänglicher Hohlräume werden vielfach fernlenkbare Kamera-Fahrzeuge bzw. bei kleineren Hohlräumen Endoskope benutzt. Seitdem zunehmend preisgünstigere und leistungsfähigere Bildverarbeitungssysteme verfügbar sind, werden zunehmend mehr Inspektionssysteme mit Bildverarbeitungssystemen ausgerüstet, um einerseits die visuelle Inspektion durch den Bediener zu unterstützen und andererseits eine (halb-) automatische Vermessung der Hohlräume durchzuführen. Da das primäre, die Auslegung des optischen Systems (Kamera und Beleuchtung) weitestgehend bestimmende Ziel die Unterstützung der Bediener ist, wird bei den marktüblichen Geräten mit konstantem, unstrukturiertem Licht beleuchtet.

Zur kompletten dreidimensionale Vermessung der inspizierten Hohlräume durch Auswertung des Kamerabildes wäre bekanntermaßen entweder eine Beleuchtung mit strukturiertem Licht oder eine zweite Kamera (Stereosichtsystem) erforderlich. Zudem ist zum Erreichen einer bestimmten Meßgenauigkeit bei den bekannten Verfahren ein Mindestabstand zwischen den Komponenten senkrecht zur Inspektionsrichtung nötig. Neben der Störung der visuellen Inspektion des Bedieners, kommt die Anwendung der bekannten optischen 3D-Meßverfahren daher zumeist schon allein vom benötigten Platzbedarf her nicht in Betracht.

Bei vielen Inspektionsfahrzeugen befinden sich die Kameras auf einem Schwenk-Neigekopf. Die Ausrichtung der Kameraachse erfolgt dort durch eine Drehung um die Kameraachse und eine Drehung um eine dazu senkrechte Achse. Im Gegensatz zur normalerweise praktizierten Ausrichtung der menschlichen Augen durch zwei Drehungen des Kopfes um Achsen senkrecht zur mittleren Augenachse, ergibt die Kombination dieser Drehungen letztendlich ein um den Horizont verdrehtes Bild der zu untersuchenden Stelle. Nach dem Stand der Technik (siehe DE-C-3 019 339) kann diese Drehung durch eine Gegendrehung des Sensorelements in der Kamera kompensiert werden.

FR-A-2 195 337 beschreibt eine Vorrichtung zur Vermessung von Rohren, bei der eine Lichtquelle ein ringförmiges Lichtmuster entlang der optischen Achse der Vorrichtung, die parallel zur Rohrachse verläuft, auf einen kegelförmigen Spiegel wirft, der das Licht muster auf die Rohrinnenwand projiziert. Die Reflexion dieses Lichtmusters wird von einem auf der optischen Achse angeordneten Photodetektor empfangen, wobei sich anhand des abgebildeten Lichtrings das Profil des Rohrdurchmessers trigonometrisch ermitteln lässt. Diese Vorrichtung erlaubt nur die Vermessung eines Querschnitts des Rohrs oder Hohlkörpers, nicht aber eine dreidimensionale Vermessung des Hohlkörpers. Letzteres kann nur durch Verschieben der Vorrichtung entlang der optischen Achse erreicht werden.

## Probleme

Um mit einem der gebräuchlichen Inspektionssysteme auch die Vermessung der Tiefe des Hohlraums zu ermöglichen, muß - wie oben erwähnt - entweder ein Stereosichtsystem oder

eine ggf. zuschaltbare Quelle strukturierten Lichts auf dem Endoskop bzw. Kamera-Fahrzeug angeordnet werden, da in die Bildebene eines Objektivs aufgrund der Schärfentiefe der Abbildung ein mehr oder weniger großes Volumen des Objektraumes abgebildet wird. Jedem Bildelement (Pixel) ist ein, die Gegenstandsebene schneidendes, Volumen in Form eines Pyramidenstumpfs zugeordnet. Ohne zusätzliche Maßnahmen ist daher mit einer Kamera allein lediglich eine sehr ungenaue Dimensionsmessung möglich, es fehlt eine Eichung der detektierten Strukturen mit dem Abbildungsverhältnis.

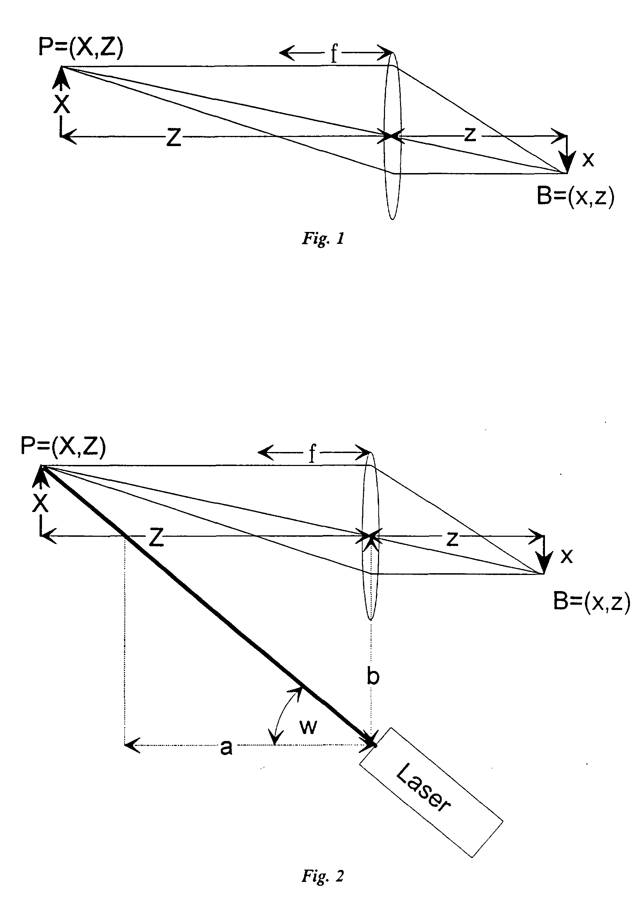

Am Schnitt einer Abbildung in der X-Z-Ebene (s.Fig. 1 und Formel {1}) kann dies verdeutlicht werden. Der Punkt P mit den Koordinaten (X,Z) wird mit einer Linse der Brennweite f auf einen Bildpunkt B mit den Koordinaten (x, z) abgebildet. Aus den Abbildungsgleichungen (bei Berücksichtigung der Bildumkehr durch eine entsprechende Wahl des x,z-Meßkoordinatensystems) folgt:

$$X = x \cdot \left( \frac{z}{f} - 1 \right) \quad \{1\},$$

d.h. ohne Kenntnis der Gegenstandsweite Z kann der Abstand X des Punktes P zur optischen Achse nicht bestimmt werden.

Nur für ebene Strukturen, die in einer Ebene parallel zur Bildebene liegen, kann unter Umständen eine einfache Abstandsmessung (beispielsweise mit Näherungsdetektoren) erfolgen. Für andere Objekte werden die Abstände einzelner Bildpunkte in der Regel mittels Lichtschnittverfahren bzw. Stereokameras bestimmt. Diese Verfahren basieren auf einer Auswertung der Parallaxe zweier optischer Systeme (2 Kameras bzw. eine strukturierte Lichtquelle und eine Kamera). Das einfachste Beispiel zur Demonstration des Prinzips der Lichtschnittverfahren, die Abbildung eines, mit einem Laserstrahl beleuchteten, Objektpunktes zeigt Fig. 2. Für den beleuchteten Objektpunkt gilt dann neben der Abbildungsbedingung {1}, daß er von dem Beleuchtungs-Strahlengang geschnitten wird. Der Laserstrahl schneidet die optische Achse im Punkt (0,a) unter einem Winkel w. Es genügt die Betrachtung der durch die optische Achse und den Laserstrahl gegebenen (X-Z)-Ebene. Für die Abbildung mittels der Linse gilt die Abbildungsbedingung {1} und aus dem Schnitt des Objektpunkts mit dem beleuchtenden Laserstrahl folgt: $X = Z \cdot \tan(w)-b$ {2} bzw. $X = (Z-a) \cdot \tan(w)$ {3}. Bei den bekannten Lichtschnittverfahren wird der Schnittpunkt des beleuchtenden Musters mit der Hauptebene der Linse als Bezugspunkt (b,0) verwendet. Dann ergeben sich die Koordinaten (X,Z) des Punktes P aus der, in der Bildebene gemessenen, x-Koordinate, dem Strahlwinkel w und der bekannten Brennweite f nach:

$$X = x \cdot \frac{f \cdot \tan(w)-b}{x-f \cdot \tan(w)} \qquad \{4\}$$

und

$$Z = f \cdot \frac{x-b}{x-f \cdot \tan(w)} \qquad \{5\}.$$

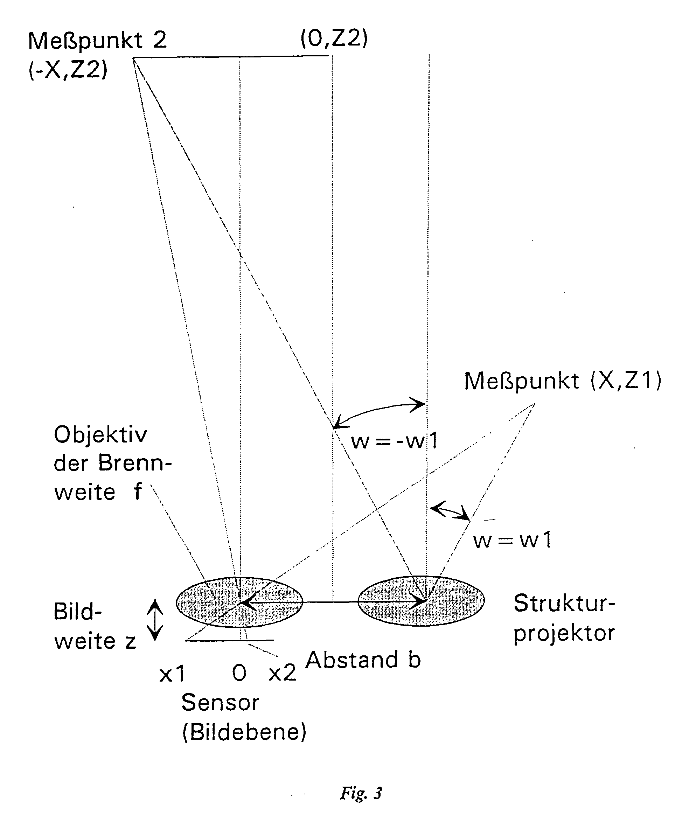

In der Regel begnügt man sich nicht damit, nur jeweils einen Punkt in der abgebildeten Ebene zu vermessen. Daher wird normalerweise eine Linie bzw. eine dem Meßobjekt angepaßte Lichtstruktur projiziert. Der Strukturprojektor befindet sich bei Anordnungen nach dem Stand der Technik in einem Abstand b neben der Kamera. Für Anwendungen, bei denen nur sehr kompakte Meßsysteme eingesetzt werden können - wie beispielsweise Sonden für die Inspektion von Rohren - kann der Strukturprojektor bei den bekannten Lichtschnitt-Anordnungen nicht im Zentrum angebracht werden. Wie am folgenden ebenen Fall einfach gezeigt werden kann, hat diese Anordnung speziell für Inspektionen zylindrischer Hohlräume bzw. Rohrinspektionen erhebliche Nachteile. Im betrachteten einfachen Fall emittiere der Strukturprojektor 2 Laserstrahlen mit den Winkeln $w = \pm$ wl gegen die optische Achse. Den Aufbau zeigt Fig. 3. Aus den Strahlverläufen und der Abbildungsbedingung folgen die Formeln {6} und {7} für die Berechnung der Koordinaten (X,Z) der Lichtschnittpunkte aus den in der Bildebene gemessenen Werten der x-Koordinate:

$$X = \frac{b}{2} + \frac{f \cdot \tan(w) \cdot (x+b)}{x-f \cdot \tan(w)} \qquad \{6\}$$

und

$$Z = f \cdot \frac{x+b}{x-f \cdot \tan(w)} \qquad \{7\}:$$

Ist der zu vermessende Nennweitenbereich der Rohre bzw. die Form und Größe der zu vermessenden Hohlräume nicht stark eingeschränkt, so daß eine Beleuchtung mit einem angepaßten Muster (bzw. gegeneinander geneigter optischer Achsen von Beleuchtung und Kamera) durchführbar ist, werden mit diesem Verfahren schräge Schnitte im Rohr bzw. Hohlraum vermessen (s. Fig. 3) - mit der Konsequenz, daß die dem Strukturprojektor zunächst liegende Seite mit hoher Genauigkeit vermessen wird (da die Meßpunkte in geringer Entfernung von der Kamera liegen), während die gegenüberliegende Seite des Rohres, bei der die Meßpunkte in erheblich größerer Entfernung zur Kamera liegen, mit geringerer Meßgenauigkeit vermessen wird. Oft wird sogar der Extremfall erreicht werden, daß Teile des Lichtschnittes außerhalb des Schärfentiefenbereichs der Abbildung sind, d.h. nicht vermessen werden können.

Aus den Meßfehlern $\sigma_x$ der x-Koordinate (in der Bildebene) resultieren die in den Formeln {8} und {9} angegebenen Meßfehler $\sigma_X$ und $\sigma_Z$ der Objektkoordinaten X,Z:

$$\sigma_x = \left| \frac{f \cdot \tan(w) \cdot (b+f \cdot \tan(w))}{(x-f \cdot \tan(w))^2} \cdot \sigma_x \right| \qquad \{8\}$$

und

$$\sigma_z = \left| \frac{f \cdot (b + f \cdot \tan(w))}{(x - f \cdot \tan(w))^2} \cdot \sigma_z \right| \qquad \{9\}.$$

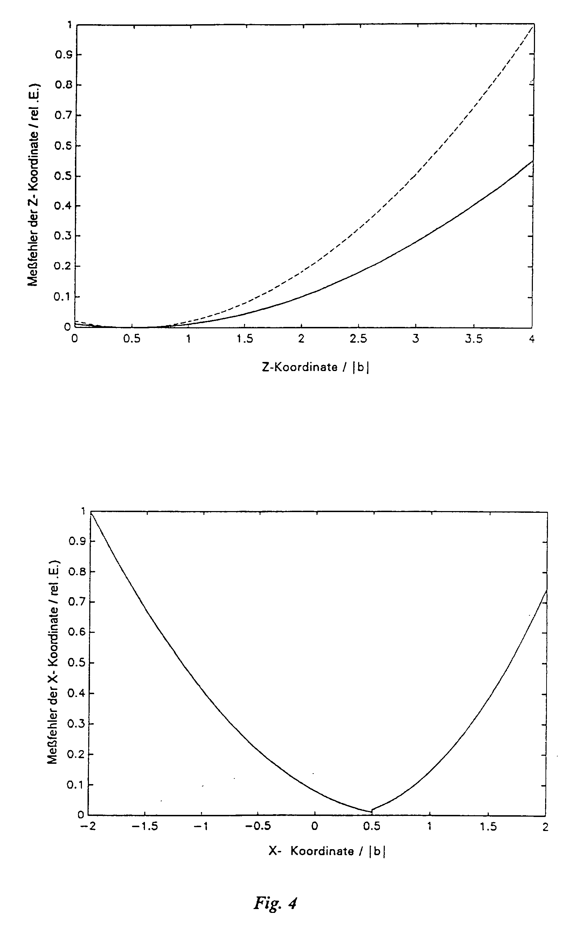

Wie die Berechnung eines typischen Verlaufs des Fehlers der Z-Koordinatenbestimmung zeigt (s. Fig. 4 oben), sind die Genauigkeiten der Z-Koordinatenmessungen im linken, (gestrichelt gezeichneten) und im rechten (durchgezogen gezeichneten) Strahlengang unterschiedlich. Ferner verdeutlicht der Verlauf der Meßgenauigkeit der X-Koordinatenbestimmung (s. Fig. 4, unten), daß bei derartigen Meßsystemen im Bereich direkt vor Kamera und Strukturprojektor die höchste Meßgenauigkeit erreicht wird. Die Meßgenauigkeit in den Bereichen außerhalb ist erheblich geringer.

Genau diese Bereiche ($|X| > b/2$) sind jedoch bei der Inspektion von Hohlräumen wie Rohren bzw. bei Inspektionen mit Endoskopen hauptsächlich von Interesse, während die Bereiche, bei denen Standard-Lichtschnittverfahren höchste Meßgenauigkeit liefern, z. T. überhaupt keinen Schnitt mit dem strukturierten Licht erlauben (bedingt durch die Geometrie der Meßobjekte). Folglich können mit diesen Verfahren in Rohren bzw. ähnlichen Hohlräumen nur vergleichsweise ungenaue Messungen durchgeführt werden.

Bei der Inspektion von Rohren kommt es bei diesen Meßverfahren ferner zu relativ großen Intensitätsunterschieden im abgebildeten Lichtschnitt und die Berechnung der Objektkoordinaten ist verhältnismäßig aufwendig. Bei einer Beleuchtung des Rohres mit einer kegelförmigen Lichtstruktur in der in Figur 3 gezeigten Anordnung ergeben sich beispielsweise die Formeln {10} bis {12} für die Berechnung der Koordinaten X,Y,Z (zum Vergleich siehe die im Folgenden gezeigte Berechnung für eine erfindungsgemäße Anordnung; Formeln {13} und {14}):

$$X = x \cdot \frac{x \cdot b + \tan^2(w) \cdot f^2 \pm \sqrt{\tan^2(w) \cdot f^2 \cdot \left(y^2 + (x+b)^2\right) - y^2 \cdot b^2}}{y^2 + x^2 - \tan^2(w)} - \frac{b}{2} \qquad \{10\};$$

$$Y = y \cdot \frac{x \cdot b + \tan^2(w) \cdot f^2 \pm \sqrt{\tan^2(w) \cdot f^2 \cdot \left(y^2 + (x+b)^2\right) - y^2 \cdot b^2}}{x^2 + y^2 - \tan^2(w)} \qquad \{11\};$$

$$Z = f \cdot \frac{x^2 + x \cdot b + y^2 \pm \sqrt{\tan^2(w) \cdot f^2 \cdot \left(y^2 + (x+b)^2\right) - y^2 \cdot b^2}}{x^2 + y^2 - \tan^2(w)} \qquad \{12\}.$$

Bei den bekannten Anordnungen sind beide optische Systeme nebeneinander angeordnet und die optischen Achsen der Systeme haben zumeist einen schiefen Winkel gegen diesen Abstand. Zum Erreichen einer gewünschten Meßgenauigkeit ist die Einhaltung eines Mindestabstands zwischen den Systemkomponenten unerläßlich, d.h. eine Ausdehnung der Systeme senkrecht zur Inspektionsrichtung. Dementsprechend können diese Systeme auch nur bedingt zur Inneninspektion von Objekten mit geringer lichter Weite (Rohre, Gefäße, kleine Hohlräume etc.) eingesetzt werden.

Für beide Anordnungen (Stereosichtsystem, Kamera und strukturierte Beleuchtung) ergeben sich bei der dreidimensionalen Vermessung der Hohlraumgeometrie jeweils unterschiedliche Probleme, besonders, wenn die Änderung der Drehlage des Kamerabilds nach dem Stand der Technik kompensiert wird.

Für eine Anordnung aus einer Kamera und einer strukturierten Beleuchtung ist die Genauigkeit der Auflösung der einzelnen Koordinaten durch den Abstand zwischen Kamera und strukturierter Beleuchtung begrenzt. Um eine möglichst einfache Bedienbarkeit des Geräts zu gewährleisten, wird die Kamera in der Regel zentrisch angeordnet. Dadurch ist der Abstand zwischen Kamera und Strukturprojektor (der die Genauigkeit der Messung einschränkt) auf die Hälfte des maximal möglichen Wertes (Durchmesser des Inspektions-systems) begrenzt, d.h. die Genauigkeit ist zusätzlich beschränkt. Ferner kommt es bei der Inspektion krummlinig begrenzter Hohlräume mit einer solchen Anordnung, bedingt durch den außerhalb der Achse befindlichen Quellpunkt des beleuchtenden Musters zu Formveränderungen zwischen beleuchtendem Muster und dem auf der Wandung des Hohlraums sichtbaren Muster, sowie zwischen diesen beiden und dem abgebildeten Muster. Zur Ermittlung der Koordinaten der interessierenden Objektstrukturen sind deshalb aufwendige Berechnungen der Koordinaten- und Formtransformationen zwischen beleuchtender Struktur, auf dem Objekt abgebildeter Struktur und mit der Kamera beobachteter Struktur nötig. In diese Strukturtransformationen geht die Lage des Abstands zwischen Kamera und Lichtquelle im Raum ein. Ferner führt dieser Abstand zu einer Verschiebung des abgebildeten Musters auf dem Kamerabild, deren Größe vom Abstand und Winkel des Inspektions-systems gegen die Hohlraumwand abhängt. Das gebräuchliche Verfahren zur Vereinfachung der Berechnung von Objektkoordinaten aus einem Kamerabild ist die Beleuchtung mit einem der Geometrie des zu vermessenden Objekts angepaßten Muster. Es kann hier aufgrund der abstands- und winkelabhängigen Verschiebung der Abbildung dieses Musters nicht genutzt werden.

Wird zusätzlich eine Anordnung zur Kompensation des Winkels zwischen Kamerabild und Horizont eingesetzt, muß weiterhin die Verdrehung von Kamerabild und beleuchtender Struktur (d.h. der Kompensationswinkel) bei der Berechnung der Strukturtransformation berücksichtigt werden.

Bei einem Stereosichtsystem hingegen muß berücksichtigt werden, daß die in die Berechnung der Tiefeninformation eingehende Lage der Kameras sich durch eine Verdrehung des Schwenk-Neigekopfs räumlich ändert. Der Rechenaufwand bei der Ermittlung der Objektkoordinaten nimmt weiter zu, falls die Kamerabilder nach dem Stand der Technik mit einer Kompensation der Bildlage gegenüber dem Horizont ausgestattet sind.

Aufgabe der Erfindung ist es, eine Anordnung zur dreidimensionalen Vermessung unzugänglicher Hohlräume zu schaffen, mit der eine gegenüber dem Stand der Technik erheblich vereinfachte Vermessung durchgeführt werden kann. Diese Aufgabe wird erfindungsgemäß durch die in den Patentansprüchen 1 und 2 angegebenen Vorrichtungen gelöst. Vorteilhafte Ausgestaltungen der Erfindung sind in den abhängigen Ansprüchen angegeben.

## Erfindung

Grundgedanke der Erfindung ist es die mittlere Achse des Inspektionssystems bzw. die mittlere Normale der mit dem Schwenk-Neigekopf geschwenkten und geneigten Plattform entweder mit den (mittleren) Achsen der Kamera und der austretenden strukturierten Beleuchtung, oder den Achsen zweier Kameras zur Deckung zu bringen und eine ggf. erforderliche Kompensation der Drehlage des Bildes bzw. der Bilder nach den Ansprüchen 3 und 4 mit einem, im Strahlengang angeordneten, drehbaren optischen Element durchzuführen. Dieses optische Element ist derart gestaltet, daß seine Verdrehung zu einer Verdrehung der Lage der Bildebene um die optische Achse führt. Beispiele solcher Elemente sind Anordnungen von Einzelprismen (z.B. Pechan-, Dove- bzw. Abbe-König Prisma) bzw. Anordnungen von Zylinderlinsen.

## Vorteilhafte Wirkungen der Erfindung

Bei einer erfindungsgemäßen Anordnung zur Durchführung des Meßverfahrens, kann die optische Achse der Kamera mit einem oder mehreren Strahlteilern virtuell auf die Achse des Strukturprojektors gelegt werden. Dieser projiziert ein zu seiner Achse symmetrisches, kegelförmiges Lichtmuster und die Anordnung wird zentrisch in einem Rohr geführt (d.h. die optischen Achsen der Kamera und des Projektors liegen in der Rohrachse), so daß ein zur Rohrachse senkrechter Schnitt des Rohres vermessen wird. Bei einem zylindrischen Rohr werden dann alle Punkte auf dem kreisförmigen Schnitt mit gleicher Genauigkeit vermessen. Alle Schnittpunkte können gleich scharf auf ein Sensorelement (z.B. CCD-Matrix) abgebildet werden und haben bei einer homogenen Oberfläche, unter der Voraussetzung einer entsprechenden Qualität des Strukturprojektors und der Abbildung, gleiche Intensität.

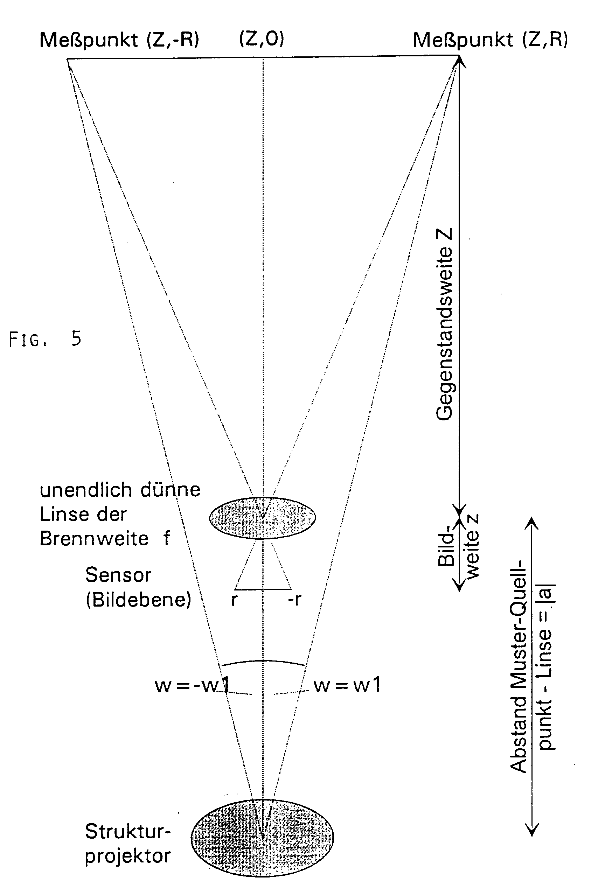

Wie das in Fig. 5 gezeigte Prinzip des Verfahrens verdeutlicht, ist eine erfindungsgemäße Anordnung symmetrisch bezüglich der (im Regelfall mittleren) Längsachse der Inspektionssonde bzw. der Normalen auf der geschwenkten und geneigten Plattform. Diese Symmetrie führt zu einer erheblich vereinfachten Koordinatentransformation zwischen dem Meßkoordinatensystem, das durch diese Plattform und die Normale auf ihr gegeben ist, und dem äußeren Zielkoordinatensystem (z.B. das zur Kartographie des Kanals benutzte Koordinatensystem). Da die Anordnung rotationssymmetrisch ist, genügt die Betrachtung des Lichtschnitts mit einem Punkt mit den Koordinaten (R,Z) in der durch die optische Achse und den Abstand des Meßpunkts zu dieser Achse gegebenen Ebene. Der Nullpunkt des Koordinatensystems liege in der Hauptebene der Linse und der Quellpunkt des Musters (Schnittpunkt mit der optischen Achse der Kamera) liege bei (0,a) (s. Fig. 5). Die Berechnung der Koordinaten erfolgt nach den Formeln {13} und {14} zu:

$$R = \frac{r \cdot \tan(w) \cdot (f-a)}{r - f \cdot \tan(w)} \qquad \{13\};$$

$$Z = \frac{f \cdot (r - a \cdot \tan(w))}{r - f \cdot \tan(w)} \qquad \{14\}.$$

Entsprechend den Formeln {13} und {14} ergeben sich aus dem Fehler $\sigma_r$ der Messung von r folgende Fehler $\sigma_Z$, $\sigma_R$ der gemessenen Objekt-Koordinaten:

$$\sigma_R = \left| \frac{(a\text{-}f)\cdot f\cdot \tan^2(w)}{(r\text{-}f\cdot\tan(w))^2} \right| \cdot \sigma_r \qquad \{15\};$$

$$\sigma_z = \left| \frac{(a\text{-}f)\cdot f\cdot \tan(w)}{(r\text{-}f\cdot\tan(w))^2} \right| \cdot \sigma_r \qquad \{16\}$$

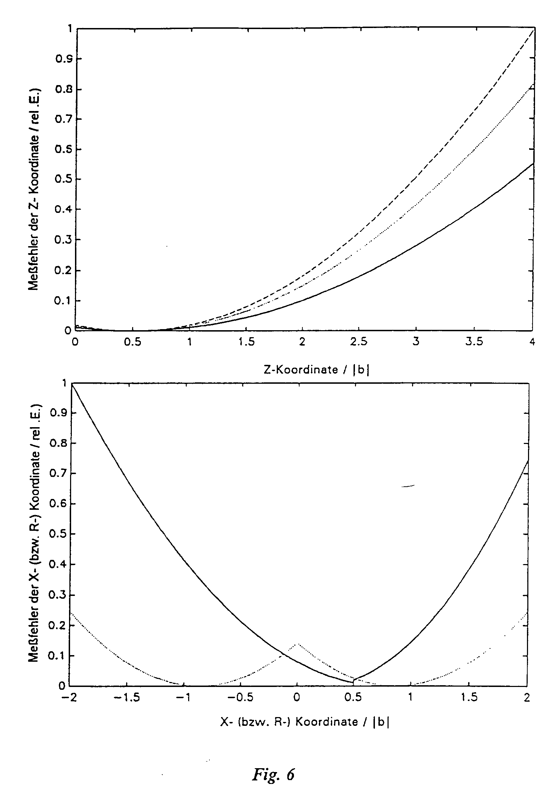

Fig. 6 zeigt einen Vergleich der Meßgenauigkeit des Verfahrens aus Fig. 3 (durchgezogene und gestrichelte Kurven (s. Fig. 4)) mit der Meßgenauigkeit eines vergleichbaren erfindungsgemäßen Verfahrens (Punktlinie). Angenommen wurde jeweils eine Basislänge von 2·f bzw. ein Schnittpunkt (0,0,-2·f) und ein Strahlwinkel von w=±30°.

Wie die in Fig. 6 dargestellten Verläufe der Meßgenauigkeit gegen den Radius und gegen den Abstand in Richtung der optischen Achse zeigt, ist die Meßgenauigkeit symmetrisch bezüglich der optischen Achse R=0 und bei entsprechender Dimensionierung des Systems besonders bei großen Abständen der Meßpunkte zur optischen Achse besser als die mit bekannten Verfahren erreichbare Genauigkeit.

Ein weiterer besonderer Vorteil des Verfahrens ergibt sich dadurch, daß nicht mehr der Querabstand der strukturierten Beleuchtung und der Kamera für die Meßgenauigkeit entscheidend ist, sondern stattdessen der Abstand in Richtung der optischen Achse. Auf diesem Verfahren beruhende Meßsysteme können daher mit minimalem Durchmesser realisiert werden und sind deshalb speziell für die Inneninspektion von Objekten mit geringer lichter Weite (typische Einsatzfälle von Rohrsonden und Endoskopen) besonders geeignet.

Ferner können bei einer erfindungsgemäßen Anordnung aus strukturierter Lichtquelle und Kamera Unterschiede zwischen der Form des detektierten Musters und dem beleuchtenden Muster lediglich auf den Verlauf bzw. die Form der Wand des Hohlraums relativ zum Zentrum des Inspektionskopfes zurückgeführt werden, während die Größe des detektierten Musters nur vom Abstand dieser Wand zum Inspektionskopf sowie dem bekannten Abstand zwischen Kamera und Beleuchtung abhängt. Liegen die optischen Achsen von Beleuchtung und Kamera genau übereinander, so liegen der Mittelpunkt des beleuchtenden Musters und der Mittelpunkt des Kamerabildes stets fest zueinander. Es treten dann keine Verschiebungen der Mittelpunkte in Abhängigkeit von dem Abstand zur Wand des Hohlraums auf, d.h. durch eine entsprechende Wahl des beleuchtenden Musters kann die Bildauswertung und Interpretation stark vereinfacht werden.

Wird die erfindungsgemäße Kompensation der Drehlage des Kamerabildes mittels eines, zwischen Strahlteiler und zu inspizierendem Hohlraumabschnitt angeordneten, drehbaren optischen Elements durchgeführt, so ist zusätzlich gewährleistet, daß die relative Drehlage zwischen beleuchtendem und detektiertem Muster stets konstant ist. Auch ohne Kenntnis des Schwenk-, Neige- und Kompensationswinkels können dann dreidimensionale Messungen des abgebildeten Hohlraumabschnitts im Meßkordinatensystem durchgeführt werden, d.h. die Auswertung des Kamerabildes wird weiter vereinfacht.

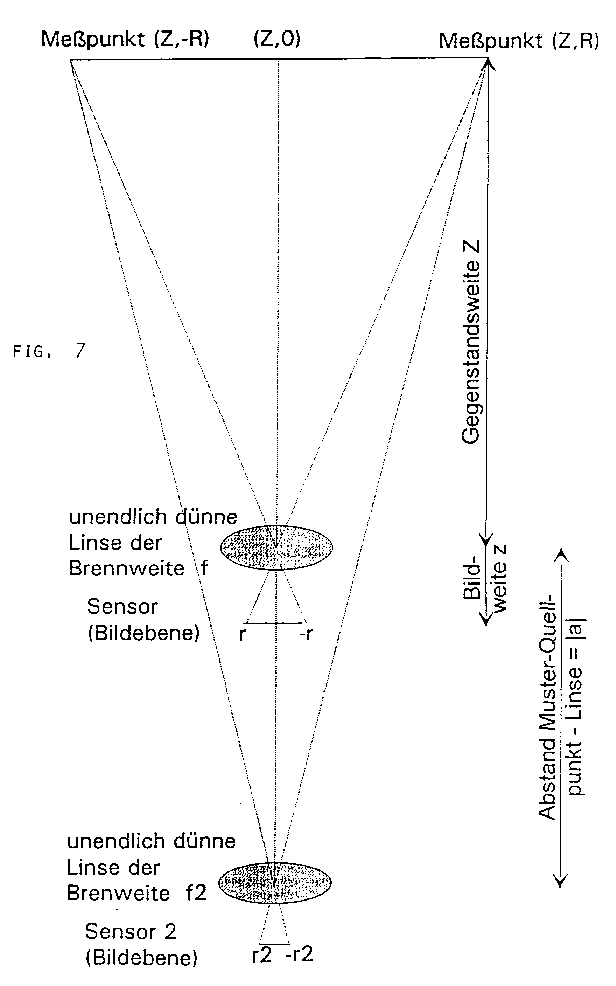

Bei einer erfindungsgemäßen Anordnung von zwei Kameras, die mittels Strahlteilern virtuell auf der gleichen optischen Achse liegen, erhält man ebenfalls eine, gegenüber den bekannten, auf Stereobildauswertung basierenden Verfahren, vereinfachte Berechnung der Objektkoordinaten. Eine erfindungsgemäße Anordnung zweier Kameras ist in Fig. 7 gezeigt. Ein Objektpunkt (R,Z) wird mit der Linse der Brennweiten f bzw. f2 auf das Sensorelement der Kamera 1 bzw. 2 abgebildet. Aus den Bedingungen für die Abbildung

$$R = r \cdot \left( \frac{Z}{f} - 1 \right) \qquad \{17\}$$

bzw.

$$R = r2 \cdot \left( \frac{Z2}{f2} - 1 \right) \qquad \{18\}$$

und der Bedingung Z2= Z+a {19} folgen die Formeln {20} und {21} zur Berechnung der Objektkoordinaten:

$$R = r2 \cdot r \cdot \frac{f+a\text{-}f2}{f2\cdot r\text{-}r2\cdot f} \qquad \{20\}$$

und

$$Z = \frac{f \cdot (r2 \cdot (a-f2) + f2 \cdot r)}{f2 \cdot r - r2 \cdot f} \qquad \{21\}.$$

Werden die Kameras auf einem Schwenk-Neigekopf angebracht und wird eine erfindungsgemäße Kompensation der Drehlage benutzt, so wird die Auswertung dieser Bilder weiter stark vereinfacht, da gegenüber einer Stereokamera nach dem Stand der Technik die Berücksichtigung von 3 verschiedenen Drehungen entfällt (Drehungen der Bildlagen der Kameras, Drehung des Abstands der Kamera um eine Normale auf der geschwenkten und geneigten Plattform).

Das Meßverfahren ist tolerant gegenüber kleinen Abständen der optischen Achsen. Die Vorteile eines erfindungsgemäßen Meßverfahrens sind - mit geringen Einschränkungen - vorhanden, wenn die optischen Achsen der Systemkomponenten (Strukturprojektor und Kamera bzw zwei Kameras) parallel und in einem Abstand sind, der sehr viel kleiner als die zum Erreichen der Meßgenauigkeit benötigte Entfernung ("effektiver Abstand a") ist. Bei einer Anordnung, bei der die Dicke der Linsen bzw. der aus einzelnen Linsen aufgebauten Kameraobjektive nicht vernachlässigbar klein ist, ist dieser Abstand a die Projektion der Entfernung der objektseitigen Hauptebenen der effektiven Kameraobjektive auf die optische Achse bzw. die entsprechende Projektion der Entfernung zwischen objektseitiger Hauptebene des effektiven Kameraobjektivs und dem Quellpunkt des projizierten Musters.

Weiterbildungen der Erfindung

Weitere vorteilhafte Weiterbildungen der Erfindung sind in den Ansprüchen 3 bis 11 angegeben.

In einer Weiterbildung der Erfindung wird ein Strahlteiler (13) zwischen Kamera und Eintrittsoptik angeordnet bzw. wird ein Strahlteiler (8) zwischen dem optischen Element (7) zur Drehung der Bildlage und der Kamera angeordnet. Die strukturierte Beleuchtung gelangt aus dem Teilstrahlengang (b) bzw. (e) kommend zur gemeinsamen Eintritts- bzw. Austrittsöffnung (5). Für den Fall der Beleuchtung mit einer rotationssymmetrischen Lichtstruktur nach Anspruch 6 sind beide Anordnungen äquivalent. Beide Anordnungen unterscheiden sich, falls nicht rotationssymmetrische Lichtstrukturen projiziert werden, der Träger (4) um die optische Achse (f) gedreht wird und die Bildlage nach Anspruch 3 korrigiert wird. Dann kommt es:

- bei einer Strahlteilung im ersten Fall zu einer Drehung der abgebildeten Lichtstruktur, während
- bei einer Strahlteilung im zweiten Fall diese Drehung ebenfalls kompensiert wird.

Ferner können die optischen Achsen von Kamera und strukturierter Beleuchtung im gemeinsamen Strahlengang so zur Deckung gebracht werden, daß es bei einer Verschiebung der Hohlraumwand gegen den Schwenk-Neigekopf zu keiner Verschiebung des Mittelpunkts des abgebildeten Musters relativ zum Kamerabild kommt.

In einer Weiterbildung können die an dem Strahlteiler (8) bzw. (13) entstehenden Intensitätsverluste minimiert werden. Das von der strukturierten Lichtquelle kommende linear polarisierte Licht gelangt bei entsprechender Ausrichtung der Polarisationsrichtung relativ zum Strahlteiler nahezu ungeschwächt durch diesen Strahlteiler. Falls im weiteren Strahlengang zum Objekt und von diesem zu dem polarisierenden Strahlteiler zurück keine Drehung der Polarisationsrichtung erfolgt, kann beispielsweise mit einem entsprechend ausgerichteten $\lambda/4$-Plättchen eine Beleuchtung des Hohlraumes mit zirkular polarisierter strukturierter Strahlung erreicht werden. Die vom Hohlraum kommende Strahlung ist dann ebenfalls zirkular polarisiert und wird beim Durchgang durch das Verzögerungselement so linear polarisiert, daß sie den Strahlteiler in Richtung Kamera nahezu ungeschwächt passiert.

Mit einer Weiterbildung kann mittels eines weiteren Strahlteilers (6) ein dritter Teilstrahlengang (g) erzeugt und mittels einer weiteren Kamera detektiert werden. Diese Kamera kann zur Unterstützung eines Bedieners eingesetzt werden, der die so aufgenommenen Bilder zur visuellen Inspektion und zum Manövrieren des Trägers bzw. Kamera-Fahrzeugs durch den Hohlraum nutzen kann.

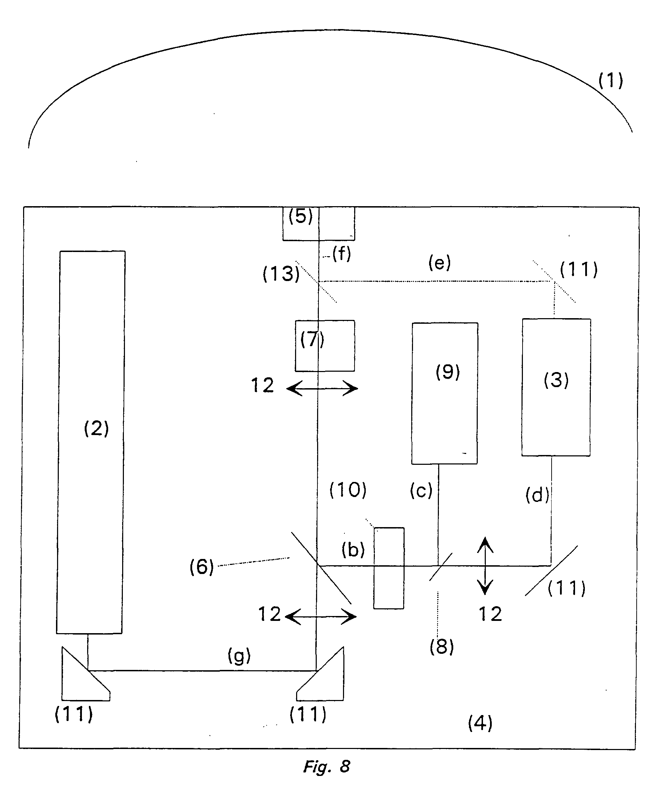

Eine besonders verlustarme Strahltrennung kann erreicht werden, wenn dieser Strahlteiler die einkommende Strahlung nach Anspruch 7 selektiv bezüglich der Wellenlänge in die Teilstrahlengänge (g) und (b) aufteilt. Wird dieser Strahlteiler beispielsweise so dimensioniert, daß nur Strahlung aus einem engen Spektralbereich um die Wellenlänge der schmalbandigen Strahlung der strukturierten Beleuchtung in den Teilstrahlengang vom Strahlteiler in Richtung strukturierter Lichtquelle bzw. zurück reflektiert wird, so gelangt ein Maximum der von einer (in Fig. 8 nicht eingezeichneten) Weißlicht-Beleuchtung stammenden eingehenden Strahlung in den anderen Teilstrahlengang. Die von der strukturierten Beleuchtung an dem Hohlraum erzeugten Lichtmuster sind in diesem Teilstrahlengang nahezu unsichtbar, d. h. das Kamerabild entspricht praktisch dem Bild, das mit einer der bisher gebräuchlichen Inspektionsanordnungen erhalten wird. In dem anderen Teilstrahlengang ist demgegenüber fast nur die aus der strukturierten Beleuchtung des Objekts resultierende Strahlung vorhanden, d.h. das durch die strukturierte Beleuchtung auf dem Objekt entstehende Muster kann mit maximalem Kontrast abgebildet werden.

Mit einer Weiterbildung nach Anspruch 8 kann eine vereinfachte erfindungsgemäße Stereobildauswertung durchgeführt werden. Dabei lassen sich mit folgenden Spezialfällen besonders vereinfachte Bildauswertungrechnungen erreichen (s. die Formeln {20} und {21}):

1. Spezialfall: a ≠ 0; f= f2, (r2≠r)

$$R= \frac{a \cdot r2 \cdot r}{f \cdot (r-r2)} \qquad \{22\}$$

und

$$Z = \frac{r2 \cdot (a-f)+f \cdot r}{r-r2} \qquad \{23\}$$

2. Spezialfall: a=0; f≠ f2, (r2≠r)

$$R = r2 \cdot r \cdot \frac{f-f2}{f2 \cdot r-r2 \cdot f} \qquad \{24\}$$

und

$$Z = \frac{f \cdot f2 \cdot (r-r2)}{f2 \cdot r-r2 \cdot f} \qquad \{25\}$$

Ist eine der effektiven Brennweiten einstellbar, so kann eine weiter vereinfachte Berechnung der Objektkoordinaten erfolgen, wenn die Brennweite(n) so eingestellt werden, daß gilt: r = r2. Dann folgt für die Objektkoordinaten (R,Z):

$$R = r \cdot \left( \frac{a}{f2-f} - 1 \right) \{26\}$$

und

$$Z = \frac{f \cdot a}{f2-f} \qquad \{27\}$$

Durch Verwendung von Umlenkelementen wie Spiegel oder Prismen können die Strahlengänge gefaltet und die räumliche Ausdehnung der gesamten Anordnung optimiert werden.

Die Verwendung abbildender optischer Elemente (z.B. Linsen, Hohl-, Parabolspiegel) in den Strahlengängen ermöglicht die Optimierung der optischen Eigenschaften (z.B. Tiefenschärfe, effektive Brennweiten der einzelnen Kameras, Abstrahlcharakteristik der strukturierten Beleuchtung, Wellenlängenbereich des wellenlängenselektiven Strahlteilers, effektiver Abstand zwischen strukturierter Lichtquelle und der Kamera bzw. den einzelnen Kameras).

Wird der Träger (4) nach Anspruch 9 auf einem rotierbaren Schwenk- bzw. Schwenk-Neigekopf angeordnet, so kann das Gesamtsystem auf unterschiedliche Abschnitte des Hohlraums ausgerichtet werden.

Besonders vorteilhaft ist die erfindungsgemäße Bildaufrichtung nach Anspruch 3 oder 4, falls zusätzliche Sensoren, wie beispielsweise Ultraschallsensoren nach Anspruch 11 auf diesem Träger bzw. mit ihm rotierbar angebracht sind. Sie können dann so ausgerichtet werden, daß sie nur einen begrenzten Winkelbereich des Hohlraums erfassen und mit dem Träger im Hohlraum rotieren. Durch diese Rotationsbewegung können die Sensoren den kompletten Hohlraum bzw. einzelne Teile des Hohlraums abtasten und so bezüglich des Winkels aufgelöste Messungen durchführen. Falls die erfindungsgemäße Kompensation der aus der Rotationsbewegung resultierenden Lagedrehung der Videobilder durchgeführt wird, kann diese Winkelabtastung ohne Beeinträchtigung der optischen Vermessung bzw. der visuellen Inspektion erfolgen.

Auf Grund der genannten Eigenschaften einer erfindungsgemäßen dreidimensionalen Vermessung, sind die angegebenen Anordnungen besonders zur Inspektion von Entsorgungsleitungen wie beispielsweise Abwasserkanälen, zur Inspektion von Versorgungsleitungen und zur Verwendung in der Endoskopie geeignet.

## Darstellung der Erfindung

Ein Ausführungsbeispiel der Erfindung wird mittels Figur 8 erläutert. Sie zeigt die Sicht auf eine ebene Anordnung der optischen Elemente auf einem gemeinsamen Träger (z. B. der Plattform eines Schwenk-Neigekopfs) (4).
In der Figur 8 ist der Teilstrahlengang von der strukturierten, polarisierten und schmalbandigen Lichtquelle (3) über einen Spiegel (11) und eine Linse (12) zum polarisierenden Strahlteiler (8) mit (d) bezeichnet. Bei entsprechender Ausrichtung der Polarisationsrichtung zu diesem Strahlteiler gelangt die strukturierte Beleuchtung nahezu ungeschwächt auf das $\lambda/4$-Plättchen (10). Die von dort zu einem wellenlängenselektiven Strahlteiler (6) gelangende Strahlung ist bei entsprechender Ausrichtung des $\lambda/4$-Plättchens zirkular polarisiert und gelangt über eine Linse (12) und ggf. z.B. über ein drehbares Pechan- bzw. Dove-Prisma (7) auf die Optik bzw. Öffnung (5) und von dort auf den zu vermessenden Abschnitt des Hohlraums (1). Das dort entstehende Lichtmuster und die von dort kommende Strahlung gelangen über die Optik bzw. Öffnung (5) ggf. z. B. über das drehbare Pechan- oder Dove-Prisma (7) auf die Linse (12) und von dort auf den wellenlängenselektiven Strahlteiler (6). Mit Ausnahme der Strahlung aus einem engen spektralen Bereich um die Wellenlänge der strukturierten Beleuchtung gelangt die vom Hohlraum kommende Strahlung nahezu vollständig durch diesen Strahlteiler in den Teilstrahlengang (g), d.h. über eine Linse (12) und 2 Prismen zur Faltung des Strahlengangs (11) auf eine (Farb-) Kamera (2). Die von dem mittels der strukturierten Beleuchtung erzeugten Lichtmuster kommende zirkular bzw. elliptisch polarisierte Strahlung gelangt im Teilstrahlengang (b) durch das $\lambda/4$-Plättchen auf den polarisierenden Strahlteiler. Sie ist nach dem $\lambda/4$-Plättchen annähernd senkrecht zur Richtung der in der Gegenrichtung durchlaufenden, von der strukturierten Beleuchtung kommenden, Strahlung polarisiert und wird deshalb nahezu vollständig von dem polarisierenden Strahlteiler (8) im Teilstrahlengang (c) auf die Kamera gelenkt.
Prinzipiell äquivalent zur Einspiegelung der strukturierten Beleuchtung über die Teilstrahlengänge (d) und (b) auf die gemeinsame optische Achse (f) ist, bei Verwendung einer rotationssymmetrischen Lichtstruktur, die Einspiegelung über den mit (e) bezeichneten Teilstrahlengang und den Strahlteiler (13). Das Verzögerungselement (10) kann in dieser Lösungsvariante entfallen und der Strahlteiler (8) kann die im Teilstrahlengang (b) einkommende Strahlung zu 100 % zur Kamera (9) spiegeln.

## Patentansprüche

1. Anordnung zur dreidimensionalen Vermessung eines unzugänglichen Hohlraumes (1), insbesondere eines Abwasser-Kanalrohrs, mit einem als Inspektionskopf ausgebildeten Träger (4), der eine strukturierte Lichtquelle (3), die ein Lichtmuster emittiert, eine Kamera (9) sowie eine Eintritts- bzw. Austrittsöffnung (5) derart aufweist,

    dass die Kamera (9) und die Lichtquelle (3) vermittels wenigstens eines Strahlteilers (6) mindestens teilweise eine gemeinsame optische Achse (f) aufweisen, die die Eintritts- bzw. Austrittsöffnung (5) durchsetzt,
    dass sich das Lichtmuster entlang der optischen Achse (f) kegelförmig erweiternd ausbreitet, und
    dass zur Vermessung mittels der Triangulationsmethode die Kamera (9) und die strukturierte Lichtquelle (3) entlang der optischen Achse (f) einen definierten Abstand (a) einschließen.

2. Anordnung zur dreidimensionalen Vermessung eines unzugänglichen Hohlraumes (1), insbesondere eines Abwasser-Kanalrohrs, mit einem als Inspektionskopf ausgebildeten Träger (4), der eine unstrukturierte Lichtquelle (3), die einen Lichtstrahk emittiert, eine erste Kamera (9) und eine zweite Kamera (2) sowie eine Eintritts- bzw. Austrittsöffnung (5) derart aufweist,

    dass die erste und zweite Kamera (9, 2) vermittels wenigstens eines Strahlteilers (6) mindestens teilweise eine gemeinsame optische Achse (f) aufweisen, die die Eintritts- bzw. Austrittsöffnung (5) durchsetzt,
    dass sich der Lichtstrahl entlang der optischen Achse (f) kegelförmig erweiternd ausbreitet, und dass zur Vermessung mittels der Triangulationsmethode die erste Kamera (9) und die zweite Kamera (2) entlang der optischen Achse (f) einen definierten Abstand (a) einschließen.

3. Anordnung nach Anspruch 1,
   **dadurch gekennzeichnet, dass** zwischen der Eintritts- bzw. Austrittsöffnung (5) und der Kamera (9) ein optisches Element (7) zur Drehung der Bildlage drehbar angeordnet ist.

4. Anordnung nach Anspruch 2,

**dadurch gekennzeichnet, dass** zwischen der Eintritts- bzw. Austrittsöffnung (5) und den Kameras (2, 9) ein optisches Element (7) zur Drehung der Bildlage drehbar angeordnet ist.

5. Anordnung nach Anspruch 1 oder 3,
   **dadurch gekennzeichnet, dass** das Lichtmuster der strukturierten Lichtquelle (3) über einen Strahlteiler (6,13) auf die gemeinsame optische Achse (f) und zur Eintritts- bzw. Austrittsöffnung (5) gelangt.

6. Anordnung nach Anspruch 1, 3 oder 5,
   **dadurch gekennzeichnet, dass** die strukturierte Lichtquelle (3) ein rotationssymmetrisches Lichtmuster emittiert.

7. Anordnung nach einem der Ansprüche 1 bis 6,
   **dadurch gekennzeichnet, dass** der Strahlteiler (6) wellenlängenselektiv ist.

8. Anordnung nach Anspruch 2,
   **dadurch gekennzeichnet, dass** die erste (9) und zweite Kamera (2) Objektive aufweisen, deren effektive Brennweiten unterschiedlich sind.

9. Anordnung nach einem der Ansprüche 1 bis 10,
   **dadurch gekennzeichnet, dass** der Träger (4) auf einem rotierbaren Schwenk- bzw. Schwenk-Neigekopf angeordnet ist.

10. Anordnung nach Anspruch 11,
    **dadurch gekennzeichnet, dass** Meßsensoren, wie Ultraschallsensoren, auf dem Träger (4) angeordnet sind.

11. Verwendung der Anordnung nach einem der Ansprüche 1 bis 10 zur Inspektion von Ver- oder Entsorgungsleitungen oder in der Endoskopie.

## Claims

1. Arrangement for the three-dimensional measurement of an inaccessible cavity (1), particularly a sewer or culvert pipe, including a carrier (4) configured as inspection head and including a structured light source (3) emitting a light pattern, a camera (9) as well as an entry or exit aperture (5) in such a way,

   that, due to at least one beam splitter (6), said camera (9) and said light source (3) present, at least partly, a common optical axis (f) that passes through said entry or exit aperture (5),
   that the light pattern propagates along said optical axis (f) with a conical expansion, and
   that for measurement by means of the triangulation technique said camera (9) and said structured light source (3) enclose a defined spacing along said optical axis (f).

2. Arrangement for the three-dimensional measurement of an inaccessible cavity (1), particularly a sewer or culvert pipe, including a carrier (4) configured as inspection head and including a non-structured light source (3) emitting a beam of light, a first camera (9) and a second camera (2) as well as an entry or exit aperture (5) in such a way

   that, due to at least one beam splitter (6), said camera (9) and said light source (3) present, at least partly, a common optical axis (f) that passes through said entry or exit aperture (5),
   that the light beam propagates along said optical axis (f) with a conical expansion, and
   that for measurement by means of the triangulation technique said'first camera (9) and said second camera (2) enclose a defined spacing along said optical axis (f).

3. Arrangement according to Claim 1,
   **characterised in that** an optical element (7) is disposed for rotational movement between said entry or exit aperture (5) and said camera (9) for rotation of the image position.

4. Arrangement according to Claim 2,
   **characterised in that** an optical element (7) is disposed for rotational movement between said entry or exit aperture (5) and said cameras (2, 9) for rotation of the image position.

**EP 0 725 921 B1**

5. Arrangement according to Claim 1 or 3,
   **characterised in that** the light pattern of said structured light source (3) arrives via a beam splitter (6, 13) on said common optical axis (f) and at said entry or exit aperture (5).

6. Arrangement according to Claim 1, 3 or 5,
   **characterised in that** said structured light source (3) emits a rotationally symmetrical light pattern.

7. Arrangement according to any of the Claims 1 to 6,
   **characterised in that** said beam splitter (6) is selective in terms of wave length.

8. Arrangement according to Claim 2,
   **characterised in that** said first (9) and second (2) cameras comprise objectives having different effective focal lengths.

9. Arrangement according to any of the Claims 1 to 8,
   **characterised in that** said carrier (4) is disposed on a rotatable pivoting or pivoting/tilting head.

10. Arrangement according to Claim 9,
    **characterised in that** measuring sensors such as ultrasound sensors are disposed on said carrier (4).

11. Application of the arrangement according to any of the Claims 1 to 10, for the inspection of utility or waste disposal pipes or in endoscopy.

**Revendications**

1. Arrangement de mesurage tridimensionnel d'un creux inaccessible (1), en particulier d'un tuyau d'un canal d'égout, comprenant un support (4) configuré sous forme de tête d'inspection et renfermant une source lumineuse (3) structurée, qui émet un dessin lumineux, une caméra (9) ainsi qu'une ouverture d'entrée ou de sortie (5), de façon

   que, grâce à au moins une lame séparatrice (6), ladite caméra (9) et ladite source lumineuse (3) présentent, au moins en partie, un axe optique commun (f), qui passe par ladite ouverture d'entrée ou de sortie (5),
   que le dessin lumineux se propage le long dudit axe optique (f) à élargissement conique, et
   que ladite caméra (9) et ladite source lumineuse (3) structurée renferment un écart défini le long dudit axe optique (f) pour le mesurage moyennant la technique de triangulation.

2. Arrangement pour le mesurage tridimensionnel d'un creux inaccessible (1), en particulier un tuyau d'un canal d'égout, comprenant un support (4) configuré sous forme de tête d'inspection et renfermant une source lumineuse (3) structurée, qui émet un dessin lumineux, une première caméra (9) et une deuxième caméra (2), ainsi qu'une ouverture d'entrée ou de sortie (5), de façon

   que, grâce à au moins une lame séparatrice (6), ladite première caméra et ladite deuxième caméra (9, 2) présentent, au moins en partie, un axe optique commun (f), qui passe par ladite ouverture d'entrée ou de sortie (5),
   que le rayon se propage le long dudit axe optique (f) à élargissement conique, et
   que ladite première caméra (9) et ladite deuxième caméra (2) renferment un écart défini le long dudit axe optique (f) pour le mesurage moyennant la technique de triangulation.

3. Arrangement selon la revendication 1,
   **caractérisé en ce qu'**un élément optique (7) est disposé, à montage rotatif, entre ladite ouverture d'entrée ou de sortie (5) et ladite caméra (9) pour la rotation de la position de l'image.

4. Arrangement selon la revendication 2,
   **caractérisé en ce qu'**un élément optique (7) est disposé, à montage rotatif, entre ladite ouverture d'entrée ou de sortie (5) et lesdites caméras (2, 9) pour la rotation de la position de l'image.

5. Arrangement selon la revendication 1 ou 3,
   **caractérisé en ce que** le dessin lumineux de ladite source lumineuse (3) structurée arrive via une lame séparatrice (6, 13) sur ledit axe optique (f) commun et à ladite ouverture d'entrée ou de sortie (5).

6. Arrangement selon la revendication 1, 3 ou 5,
   **caractérisé en ce que** ladite source lumineuse (3) structurée émet des dessins lumineux en symétrie de révolution.

7. Arrangement selon une quelconque des revendications 1 à 6,
   **caractérisé en ce que** ladite lame séparatrice (6) est sélective pour des longueurs d'ondes.

8. Arrangement selon la revendication 2,
   **caractérisé en ce que** ladite première caméra (9) et ladite deuxième caméra (2) comprennent des objectifs aux focales effectives différentes.

9. Arrangement selon une quelconque des revendications 1 à 8,
   **caractérisé en ce que** ledit support (4) est disposé sur une tête pivotante rotative ou respectivement une tête pivotante/inclinable.

10. Arrangement selon la revendication 9,
    **caractérisé en ce que** des détecteurs de mesure, comme des détecteurs à ultrasons, sont disposés sur ledit support (4).

11. Application de l'arrangement selon une quelconque des revendications 1 à 10, pour l'inspection des canaux de service public ou d'évacuation, ou dans l'endoscopie.

*Fig. 1*

*Fig. 2*

Meßpunkt 2
(-X,Z2)

(0,Z2)

Meßpunkt (X,Z1)

$w = -w1$

Objektiv
der Brennweite f

$w = w1$

Bildweite z

Strukturprojektor

Abstand b

x1     0   x2

Sensor
(Bildebene)

*Fig. 3*

*Fig. 4*

Meßpunkt (Z,-R)    (Z,O)           Meßpunkt (Z,R)

FIG. 5

unendlich dünne
Linse der
Brennweite  f

Sensor
(Bildebene)

r     -r

w = -w1        w = w1

Strukturprojektor

Gegenstandsweite Z

Bildweite z

Abstand Muster-Quell-
punkt - Linse = |a|

*Fig. 6*

Meßpunkt (Z,-R)    (Z,0)    Meßpunkt (Z,R)

FIG. 7

Gegenstandsweite Z

unendlich dünne
Linse der
Brennweite \f

Sensor
(Bildebene)    r    -r

Bildweite z

Abstand Muster-Quell-
punkt - Linse = |a|

unendlich dünne
Linse der
Brenweite  f2

Sensor 2
(Bildebene)    r2  -r2

*Fig. 8*